# EUROPÄISCHE PATENTSCHRIFT

(11) **EP 3 417 685 B1**
(45) Veröffentlichungstag und Bekanntmachung des Hinweises auf die Patenterteilung: **27.05.2020**
(21) Anmeldenummer: 18172333.9
(22) Anmeldetag: 15.05.2018
(51) Int. Cl.: A01B 59/00, A01B 63/114, B66F 3/42, A01B 59/06

(54) **VERFAHREN ZUR BESTIMMUNG EINER PHYSIKALISCHEN GRÖSSE EINES OBERLENKERS**
METHOD FOR DETERMINING A PHYSICAL SIZE OF A TOP LINK
PROCÉDÉ DE DÉTERMINATION D'UNE GRANDEUR PHYSIQUE D'UN BRAS SUPÉRIEUR

(30) Priorität: 22.06.2017 DE 102017210532
(43) Veröffentlichungstag der Anmeldung: 26.12.2018
(73) Patentinhaber: Deere & Company, Moline, IL 61265 (US)
(72) Erfinder: Gresch, Valentin, 68163 Mannheim (DE); Reinmuth, Florian, 68163 Mannheim (DE)
(74) Vertreter: Dehnhardt, Florian Christopher

(56) Entgegenhaltungen:
- EP-A1- 2 947 431
- WO-A1-2016/192973
- DE-A1- 10 140 383
- DE-A1- 19 747 949

## Beschreibung

Die Erfindung betrifft ein Verfahren zur Bestimmung einer physikalischen Größe eines Oberlenkers mit den Merkmalen des Oberbegriffs des Patentanspruches 1.

Aus DE 197 47 949 A1 ist ein Traktor mit einem Heck-Kraftheber bekannt, welcher einen Oberlenker und zwei Unterlenker aufweist. An dem Heck-Kraftheber ist ein Anbaugerät gelagert. Dabei soll für jedes Anbaugerät eine optimale Kinematik hinsichtlich des Einsatzes erzielt werden, indem eine Ist-Längeneinstellung des Oberlenkers erfasst und mit einer Soll-Längeneinstellung verglichen wird. Abhängig von dem Vergleich kann die Längeneinstellung des Oberlenkers verkürzt oder verlängert werden. Hierbei wird eine abgespeicherte Kurve verwendet, welche jeweilige Soll-Längeneinstellungen im Verhältnis zu zugehörigen Hubstellungen der Unterlenker darstellt.

Der vorliegenden Erfindung liegt die Aufgabe zugrunde, eine physikalische Größe eines verstellbaren Oberlenkers eines Krafthebers während des Arbeitseinsatzes effizient und kostengünstig bestimmen zu können.

Diese Aufgabe wird gemäß den Merkmalen des Patentanspruchs 1 gelöst.

Gemäß Patentanspruch 1 wird eine physikalische Größe eines verstellbaren Oberlenkers eines Krafthebers während seines Arbeitsbetriebs mit einem angebauten Arbeitsgerät bestimmt. Dabei wird die physikalische Größe unter Verwendung von Kalibrierdaten bestimmt, welche vor einem Arbeitsbetrieb des Krafthebers generiert werden. Die Kalibrierdaten können folglich in einem Kalibriervorgang vor dem Arbeitsbetrieb des Krafthebers generiert werden. Die Kalibrierung erfolgt derart, dass die Kalibrierdaten ein Verhältnis von einer Länge des Oberlenkers zu einem Oberlenker-Winkel repräsentieren. Hierdurch kann ein verfahrenstechnisch einfach handhabbares Kalibrierdiagramm bereitgestellt werden, welches eine Oberlenker-Länge in Abhängigkeit eines Oberlenker-Winkels oder umgekehrt darstellt.

Der Oberlenker-Winkel ist zwischen dem Oberlenker (z.B. einer Mittellängsachse des Oberlenkers) und einer Bezugsgeraden eingeschlossen. Als Bezugsgerade dient beispielsweise die Erdhorizontale oder eine Fahrzeug-Horizontale eines den Kraftheber tragenden Fahrzeugs bzw. Arbeitsmaschine. Vorzugsweise verläuft die Fahrzeug-Horizontale parallel zu einer Fahrtrichtung des Fahrzeugs.

Der Oberlenker ist während des Arbeitsbetriebs bezüglich seiner Länge und/oder seines Oberlenker-Winkels verstellbar. Eine genaue Kenntnis dieser Daten des Oberlenkers ist beispielsweise relevant, um eine tatsächliche Arbeitshöhe des Anbaugeräts sowie dessen Orientierung, insbesondere Verkippung, relativ zu der den Kraftheber tragenden mobilen Arbeitsmaschine bestimmen zu können. Mit Hilfe der vorgenannten Kalibrierdaten können nun technisch aufwändige und entsprechend kostenintensive Messanordnungen am Oberlenker oder anderen Positionen am Kraftheber oder an der Arbeitsmaschine vermieden werden, um eine Position oder Lage eines Krafthebers oder eines daran angebauten Anbaugerätes während des Arbeitseinsatzes zu bestimmen. Die Kalibrierdaten bieten eine einfache Möglichkeit der Umrechnung von einer Länge des Oberlenkers auf einen Oberlenker-Winkel und umgekehrt. Je nach Anwendung der Kalibrierdaten kann deshalb auf Messanordnungen, welche herkömmlich am Kraftheber oder an der mobilen Arbeitsmaschine angeordnet sind, zumindest teilweise kostensparend verzichtet werden.

Die verfahrensgemäß bestimmte physikalische Größe des Oberlenkers kann auch als Eingangsgröße oder Regelgröße verwendet werden, z.B. bei der Bestimmung einer Gewichtskraft eines Anbaugerätes am Kraftheber oder bei der Bestimmung einer Achslast.

Die mobile Arbeitsmaschine ist insbesondere als landwirtschaftliches Fahrzeug, z.B. Schlepper, Traktor, oder dergleichen ausgebildet.

Das Anbaugerät kann unterschiedlich ausgestaltet sein. Beispielsweise kann es eine Arbeitsfunktion bezüglich eines zu bearbeitenden Ackerbodens, eine Transportfunktion (z.B. Hecklader, Frontlader, Ballengabel, Siloblockschneider) oder eine Funktion als Zusatzgewicht haben.

Vorzugsweise wird mittels einer geeigneten Messanordnung oder Sensorik während des Arbeitsbetriebs des Krafthebers ein aktueller Oberlenker-Winkel des Oberlenkers erfasst. Unter Verwendung der Kalibrierdaten kann dann die aktuelle Länge des Oberlenkers bestimmt werden. Hierdurch kann auf eine komplexe und kostenintensive Messanordnung (z.B. Sensorik und/oder andere Bauteile) zur Bestimmung der aktuellen Länge des Oberlenkers verzichtet werden. Da derartige Messanordnungen herkömmlich teilweise im Oberlenker integriert sind, ermöglicht der Wegfall einer derartigen Messanordnung auch, dass etwaige Beeinträchtigungen des Längenverstellbereiches des Oberlenkers vermieden werden.

In einer weiteren bevorzugten Ausführungsform wird eine direkte Messung bzw. sensorische Erfassung der Länge des Oberlenkers durchgeführt. In diesem Fall kann ohne weitere Bauteile, Sensorik oder dergleichen der jeweilige Oberlenker-Winkel bestimmt werden. Ebenso kann ausgehend von einer direkt gemessenen Oberlenker-Länge ohne zusätzliche technische Ausstattung ein entsprechender Oberlenker-Winkel für unterschiedliche Anwendungen als Eingangs- oder Regelgröße verwendet werden, z.B. bei der Ermittlung einer Masse bzw. Gewichtskraft eines Anbaugeräts oder der Ermittlung einer Achslast der mobilen Arbeitsmaschine.

Grundsätzlich ist es sinnvoll, die Kalibrierdaten abhängig von bestimmten Einstellungen des Krafthebers zu generieren, da je nach geometrischer Einstellung des Krafthebers das Verhältnis zwischen der Oberlenker-Länge und dem Oberlenker-Winkel unterschiedlich sein kann. Für unterschiedliche geometrische Einstellungen des Krafthebers und einer entsprechenden Generierung unterschiedlicher Kalibrierdaten kann z.B. mindestens eines der folgenden Merkmale berücksichtigt werden:
- unterschiedliche Gelenkpositionen am Unterlenker zur Anlenkung einer Hubstrebe (z.B. Hubspindel),
- unterschiedliche Anlenkpositionen an der Tragstruktur der Arbeitsmaschine zur Anlenkung des Oberlenkers,
- eingestellte Länge der Hubstrebe (z.B. Hubspindel),
- unterschiedliche Kopplungsstellen am Anbaugerät zur Kopplung des Oberlenkers und des bzw. der Unterlenker und somit unterschiedliche Masthöhen.

Insbesondere wird vor oder während des Arbeitsbetriebs des Krafthebers dessen geometrische Einstellung überprüft, um die für diese Einstellung zugeordneten Kalibrierdaten für eine Bestimmung der Oberlenker-Länge oder des Oberlenker-Winkels heranzuziehen. Diese Überprüfung der geometrischen Einstellung erfolgt vorzugsweise, indem Sensordaten erfasst und verarbeitet werden (z.B. in einem entsprechenden Steuergerät). Vorteilhaft werden Kalibrierdaten für unterschiedliche mögliche Masthöhen bezüglich eines spezifischen Anbaugeräts oder bezüglich unterschiedlicher Anbaugeräte generiert. Vor oder während des Arbeitsbetriebs können dann abhängig von dem erkannten Anbaugerät oder abhängig von der erkannten Masthöhe des Anbaugeräts die bereits vorher generierten und zugeordneten Kalibrierdaten manuell oder automatisch abgerufen werden.

In einer bevorzugten Ausführungsform werden Kalibrierdaten in Abhängigkeit von einer definierten Hubposition des Unterlenkers generiert. Die Hubposition ist insbesondere durch einen Winkel zwischen dem Unterlenker und einer Bezugsgeraden (z.B. eine Fahrzeug-Horizontale oder Erdhorizontale) definiert.

Bei unterschiedlichen Hubpositionen des Unterlenkers ergeben sich üblicherweise unterschiedliche Verhältnisse zwischen der Oberlenker-Länge und dem Oberlenker-Winkel. Es ist deshalb vorteilhaft, für mehrere, also unterschiedliche Hubpositionen jeweils Kalibrierdaten zu generieren. Während des Arbeitsbetriebs können dann in Abhängigkeit von der erkannten Hubposition automatisch die dieser Hubposition zugeordneten Kalibrierdaten bereitgestellt werden.

Beispielsweise werden während des Kalibriervorgangs Kalibrierdaten für eine erste Hubposition (z.B. eine minimale Hubposition) und danach für eine zweite Hubposition (z.B. eine maximale Hubposition) generiert. Auf Basis der Kalibrierdaten für diese beiden Hubpositionen können technisch einfach mittels Interpolation Kalibrierdaten für eine Vielzahl dazwischen liegender Hubpositionen generiert werden, so dass mit geringem Kalibrieraufwand ein ganzes Kennfeld erzeugt und bereitgestellt werden kann.

Vorteilhaft wird für Verstellungen des Unterlenkers während des Arbeitsbetriebs ein Arbeitsbereich definiert, der von einer ersten oder minimalen Hubposition bis zu einer zweiten oder maximalen Hubposition reicht. Wie bereits erwähnt, kann für diesen gesamten Arbeitsbereich mit geringem Kalibrieraufwand ein Kennfeld mit Kalibrierdaten für eine Vielzahl von unterschiedlichen Hubpositionen generiert werden. Außerhalb des definierten Arbeitsbereichs werden dann im Sinne eines geringen Kalibrieraufwands keine weiteren Kalibrierdaten generiert. Für eine technisch einfache Durchführung des Verfahrens ist es deshalb günstig, während des Arbeitsbetriebs im Falle einer detektierten Hubposition außerhalb des Arbeitsbereichs die Bestimmung einer physikalischen Größe des Oberlenkers auszusetzen.

Zur Generierung von Kalibrierdaten ist es vorteilhaft, den Unterlenker bei angebautem Anbaugerät in einer definierten Hubposition zu halten und dann den Oberlenker hinsichtlich seiner Länge zu verändern. Mit anderen Worten wird der Oberlenker während der Kalibrierung zwischen einer minimalen Oberlenker-Länge und einer maximalen Oberlenker-Länge ausgefahren oder eingefahren. Die minimale Oberlenker-Länge kann eine physikalisch kleinstmögliche Länge oder eine definierte kleinste Länge des Oberlenkers sein. Analog kann die maximale Oberlenker-Länge eine physikalisch größtmögliche Länge oder eine definierte größte Länge des Oberlenkers sein.

Vorzugsweise wird während der Längenveränderung des Oberlenkers im Rahmen der Kalibrierung der Oberlenker-Winkel erfasst, um vollständige Kalibrierdaten zu generieren.

Um die Genauigkeit der Kalibrierdaten zu erhöhen, wird während der Kalibrierung der Oberlenker vorzugsweise in beide Richtungen verfahren. Der Oberlenker kann also beispielsweise zunächst in Richtung einer maximalen Oberlenker-Länge ausgefahren und danach in Richtung einer minimalen Oberlenker-Länge eingefahren werden.

Um die Kalibrierdaten mit geringem Aufwand zu generieren, wird in einer bevorzugten Ausführungsform während der Längenveränderung des Oberlenkers der Oberlenker-Winkel erfasst. Einzelnen Werten der während der Kalibrierung erreichten Oberlenker-Länge kann dann jeweils ein (insbesondere sensorisch oder messtechnisch) erfasster Oberlenker-Winkel zugeordnet werden. Diese Zuordnung erfolgt insbesondere in Abhängigkeit der Zeit, so dass bei einer als bekannt vorausgesetzten Verfahrgeschwindigkeit des Oberlenkers jedem betrachteten Zeitpunkt ein Wert der Oberlenker-Länge und ein Wert des Oberlenker-Winkels zugeordnet werden kann. Hierdurch können Kalibrierdaten oder ein Kalibrierdiagramm auf einfache Weise generiert werden, ohne dass hierzu die Länge bzw. Längenveränderung des Oberlenkers direkt gemessen werden muss. Dies unterstützt eine kostengünstige Generierung der Kalibrierdaten und eine entsprechend kostengünstige Bestimmung der gesuchten physikalischen Größe des Oberlenkers. Die Verfahrgeschwindigkeit des Oberlenkers wird dabei als bekannt vorausgesetzt, indem die Bewegungen des Oberlenkers beispielsweise als kontinuierlich (d.h. konstanter Verfahrgeschwindigkeit) angenommen werden oder - insbesondere bei nicht konstanter Verfahrgeschwindigkeit) durch empirische Versuche bekannt sind.

Vorzugsweise werden die Kalibrierdaten in Form einer datentechnisch einfach handhabbaren Kennlinie bereitgestellt. Dabei kann für eine definierte Einstellung des Krafthebers, z.B. einer definierten Hubposition des Unterlenkers, während des Kalibriervorgangs eine spezifische Kennlinie generiert werden.

Weiter bevorzugt wird die Oberlenker-Länge in Abhängigkeit von mindestens einem der folgenden Merkmale bestimmt:
- einer zeitlichen Veränderung des Oberlenker-Winkels,
- einer Verstellrichtung der Oberlenker-Länge.
Die Verstellrichtung kann im Falle eines hydraulischen Oberlenkers beispielsweise durch die Stellung eines den Oberlenker aktuierenden hydraulischen Steuerventils bestimmt werden. Die Verstellrichtung liefert eine Information darüber, ob der Oberlenker in Richtung einer größeren oder kleineren Länge verstellt wird. Die Berücksichtigung der vorgenannten Merkmale ermöglicht mit geringem Datenverarbeitungsaufwand eine eindeutige Bestimmung der Oberlenker-Länge, auch wenn die Kalibrierdaten oder die Kennlinie einen Extremwert oder Scheitelpunkt (insbesondere einen maximalen Oberlenker-Winkel) enthalten, während beiderseits des Extremwerts oder Scheitelpunkts jeweils ein identischer Wert des Oberlenker-Winkels an der Kennlinie vorhanden ist. In diesem Fall sind bei einem sensorisch ermittelten Wert des Oberlenker-Winkels zwei Werte der Oberlenker-Länge möglich. Durch Auswertung einer aufgezeichneten Zeitschreibung des Oberlenker-Winkels und der ermittelten Verstellrichtung des Oberlenkers kann der Wert der Oberlenker-Länge eindeutig bestimmt werden.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
Fig. 1 eine Seitenansicht eines Krafthebers mit einem Unterlenker in einer ersten Hubposition,
Fig. 2 eine Seitenansicht eines Krafthebers gemäß Fig. 1 mit dem Unterlenker in einer anderen Hubposition,
Fig. 3 ein Diagramm mit Kalibrierdaten als Kennlinien, welche einen Oberlenker-Winkel im Verhältnis zu einer Oberlenker-Länge darstellen, und
Fig. 4 ein Blockschaltbild mit einem schematisch dargestellten Zusammenwirken von Bauteilen zur Bestimmung einer physikalischen Größe eines Oberlenkers.

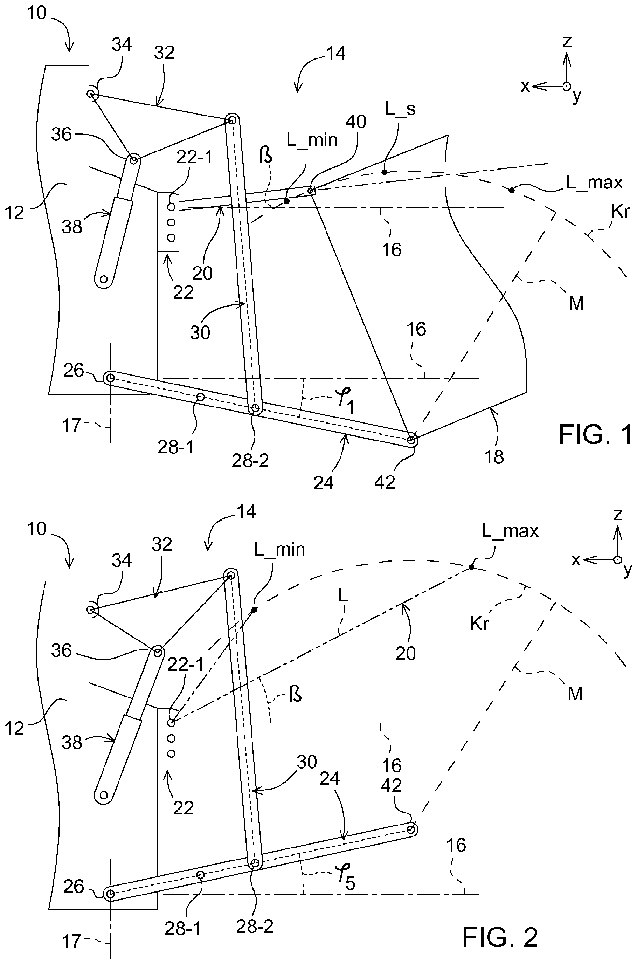

In Fig. 1 ist ein landwirtschaftliches Fahrzeug 10, insbesondere ein Traktor, mit einer Tragstruktur 12 (z.B. Rahmen Chassis, etc.) teilweise und schematisch dargestellt. An der Tragstruktur 12 ist ein nicht maßstabsgetreu und prinzipiell dargestellter Dreipunkt-Kraftheber 14 angebracht. Von dem Dreipunkt-Kraftheber 14 ist eine ebene Kinematik in einer Ebene aufgespannt, die anhand von Fig. 1 und Fig. 2 als eine x-z-Ebene bezeichnet ist. Dabei entspricht die x-Richtung einer Fahrzeug-Längsrichtung bzw. Fahrzeug-Horizontalen 16, während die z-Richtung einer Fahrzeug-Hochrichtung bzw. Fahrzeug-Vertikalen 17 entspricht. Eine quer zur x-Richtung und z-Richtung angeordnete y-Richtung entspricht einer Fahrzeug-Querrichtung. An dem Fahrzeug 10 ist mittels des Dreipunkt-Krafthebers 14 ein schematisch dargestelltes Anbaugerät 18 angebaut.

Der Dreipunkt-Kraftheber 14 umfasst einen Oberlenker 20, der über eine Anlenkstelle 22 an der Tragstruktur 12 des Fahrzeugs 10 gelenkig befestigt ist. Die Anlenkstelle 22 ermöglicht entlang der Fahrzeug-Vertikalen 17 drei unterschiedliche Anlenkpositionen für den Oberlenker 20, wobei in dem Ausführungsbeispiel die Anlenkposition 22-1 benutzt ist.

Weiterhin umfasst der Dreipunkt-Kraftheber 14 zwei in y-Richtung bzw. Querrichtung des Fahrzeugs 10 voneinander beabstandete Unterlenker 24. Jeder Unterlenker 24 ist über ein Lager 26 an der Tragstruktur 12 gelenkig befestigt. Der Unterlenker 24 weist zwei unterschiedliche Gelenkpositionen 28-1 und 28-2 zur wahlweisen Anlenkung einer Hubstrebe 30 auf. Im dargestellten Ausführungsbeispiel ist die Hubstrebe 30 an der Gelenkposition 28-2 angelenkt. Der Unterlenker 24 ist über die Hubstrebe 30 mit dem einen Ende eines Hubarmes 32 gelenkig verbunden, der mit seinem anderen Ende über eine Anlenkung 34 gelenkig mit der Tragstruktur 12 des Fahrzeugs 10 verbunden ist. Der Hubarm 32 ist über einen in einem Hubarmgelenk 36 angreifenden und gegen die Tragstruktur 12 abgestützten Hydraulikzylinder 38 relativ zur Tragstruktur 12 schwenkbar. Bei einer entsprechenden Betätigung des Hydraulikzylinders 38 wird der Hubarm 32 geschwenkt, so dass dessen Schwenkbewegungen über die Hubstrebe 30 auf den Unterlenker 24 übertragen werden. Auf diese Weise wird der Unterlenker 24 beispielsweise von einer ersten Hubposition bei einem Winkel ϕ₁ relativ zur Fahrzeug-Horizontalen 16 (Fig. 1) in eine weitere Hubposition bei einem Winkel ϕ₅ relativ zur Fahrzeug-Horizontalen 16 (Fig. 2) geschwenkt. Dabei ist die Länge der Hubstrebe 30 konstant. In einer weiteren bevorzugten Ausführungsform ist die Länge der Hubstrebe 30 verstellbar(z.B. als Hubspindel), so dass Winkellagen des Hubarmes 32 und des Unterlenkers 24 zueinander verstellt werden können.

Oberlenker 20 und Unterlenker 24 sind über eine Kopplungsstelle 40 bzw. einen Kopplungsstelle 42 mit dem Anbaugerät 18 verbunden. Der Oberlenker 20 ist bezüglich seiner Oberlenker-Länge L zwischen einer minimalen Länge L_min und einer maximalen Länge L_max verstellbar. Hierzu ist der Oberlenker 20 beispielsweise als hydraulischer Oberlenker mit einer Kolben-Zylinder-Einheit ausgebildet. Bei einer konstanten Hubposition, z.B. mit dem Winkel ϕ₁ oder ϕ₅, des Unterlenkers 24 und einer konstanten Masthöhe M zwischen der Kopplungsstelle 40 und der Kopplungsstelle 42 wird die Kopplungsstelle 40 entlang einer Kreisbahn Kr mit der Masthöhe M als Radius geführt, wenn die Oberlenker-Länge L verstellt wird. Hierbei ändert sich ein Oberlenker-Winkel β zwischen dem Oberlenker 20 und der Fahrzeug-Horizontalen 16 als Bezugsgerade.

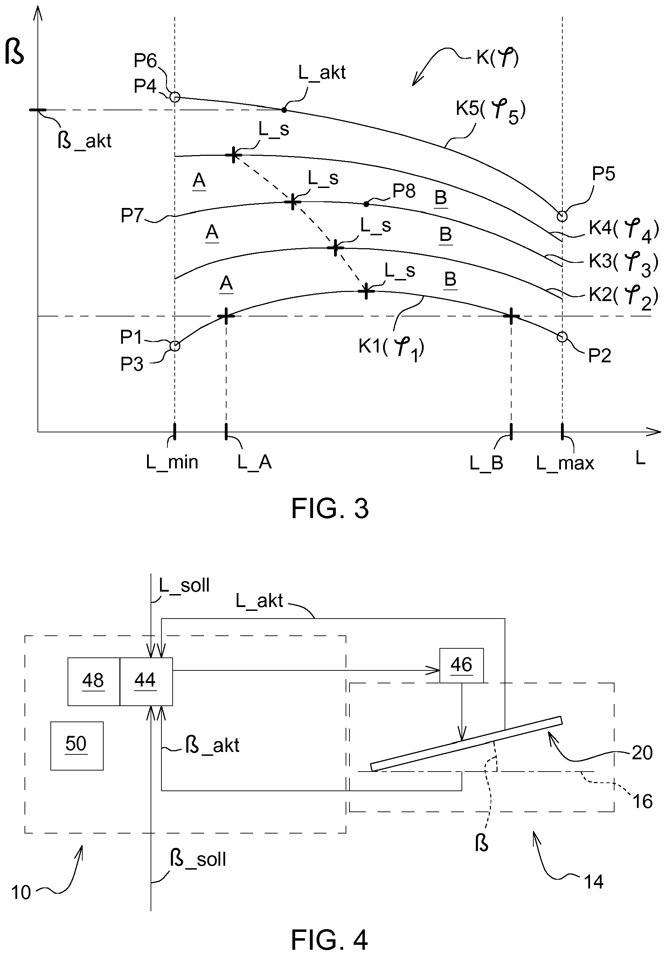

Verfahrensgemäß werden zur Bestimmung der Oberlenker-Länge L oder des Oberlenker-Winkels β des Oberlenkers 20 während des Arbeitsbetriebs des Krafthebers 14 Kalibrierdaten bereitgestellt. Gemäß Fig. 3 werden die Kalibrierdaten beispielhaft in Form unterschiedlicher Kennlinien K1, K2, K3, K4, K5 bereitgestellt. Jeder Kennlinie K ist ein unterschiedlicher Unterlenker-Winkel ϕ zugeordnet. Beispielsweise ist der Kennlinie K1 der Unterlenker-Winkel ϕ₁, der Kennlinie K2 der Unterlenker-Winkel ϕ₂, usw. zugeordnet. Die Kennlinien K sind Bestandteil eines Diagramms, welches abhängig von unterschiedlich eingestellten Hubpositionen der Unterlenker 24 (d.h. unterschiedlichem Unterlenker-Winkel ϕ) ein Verhältnis zwischen der Oberlenker-Länge L und dem Oberlenker-Winkel β repräsentiert. Hierdurch ist eine einfache Umrechnung zwischen der Oberlenker-Länge L und dem Oberlenker-Winkel β während des Arbeitsbetriebs möglich, wenn der Kraftheber 14 definiert eingestellt ist.

Abgesehen von üblichen Sensormitteln am Fahrzeug 10 zur Erfassung unterschiedlicher physikalischer Größen oder Merkmale sollen die Oberlenker-Länge L und der Oberlenker-Winkel β des Oberlenkers 20 während des Arbeitseinsatzes kostengünstig bestimmt werden.

In einer bevorzugten Ausführungsform sind am Oberlenker 20 geeignete Sensormittel (vorzugsweise Inertial- oder Neigungssensor) vorgesehen, um den Oberlenker-Winkel β zu erfassen. Bei dieser Ausführungsform wird der Oberlenker-Winkel β bei einer eingestellten Hubposition des Unterlenkers 24 sensorisch erfasst und die Oberlenker-Länge L als physikalische Größe bestimmt. Eine kostenintensive und aufwändige Instrumentierung oder Nachrüstung des Fahrzeugs 10 und/oder des Krafthebers 14 zur Erfassung der Oberlenker-Länge L kann somit vermieden werden. In einer weiteren bevorzugten Ausführungsform wird zunächst die Oberlenker-Länge L sensorisch erfasst, um mittels der bereitgestellten Kalibrierdaten bei einer eingestellten Hubposition des Unterlenkers 24 den Oberlenker-Winkel β als physikalische Größe zu bestimmen. In diesem Fall ist eine sensorische Erfassung des Oberlenker-Winkels β überflüssig.

Die Kalibrierdaten werden mittels eines Kalibriervorgangs generiert. Mit anderen Worten wird für eine spezifische Geometrie des Krafthebers 14 das Diagramm gemäß Fig. 3 kalibriert. Hierbei ist das Anbaugerät 18 an dem zu kalibrierenden Kraftheber 14 angebaut. Bei der Kalibrierung wird der Unterlenker 24 in mindestens zwei unterschiedliche Hubpositionen des Krafthebers 14 eingestellt, z.B. in eine erste Hubposition mit dem Unterlenker-Winkel ϕ₁ gemäß Fig. 1 und in eine weitere Hubposition mit dem Winkel Unterlenker-ϕ₅ gemäß Fig. 2. In jeder eingestellten Hubposition wird der Oberlenker 20 zwischen seinen beiden Endpositionen, d.h. zwischen der minimalen Oberlenker-Länge L_min und der maximalen Oberlenker-Länge L_max bewegt bzw. verstellt. Die Bewegung des Oberlenkers 20 wird dabei als bekannt vorausgesetzt, z.B. eine kontinuierliche Bewegung mit konstanter Verstellgeschwindigkeit oder eine durch empirische Versuche bekannte und nicht konstante Verstellgeschwindigkeit. Um etwaige Abweichungen von der vorausgesetzten Bewegung des Oberlenkers 20 zu kompensieren, wird der Oberlenker 20 vorzugsweise in beide Richtungen verstellt.

Ab dem Start der Kalibrierung kann zu jedem Zeitpunkt eine aktuelle Oberlenker-Länge L_akt registriert werden, ohne dass diese gemessen werden muss. Während der registrierten Veränderung der Oberlenker-Länge L wird zu jeder aktuellen Oberlenker-Länge L_akt der jeweilige Wert des aktuellen Oberlenker-Winkels β_akt erfasst, z.B. mittels einer Sensorik. Aus den derart bei einer definierten Hubposition des Unterlenkers 24 registrierten Wertepaaren der aktuellen Oberlenker-Länge L_akt und aktuellen Oberlenker-Winkel β_akt kann eine Kennlinie (z.B. die Kennlinie K5) erstellt und abgespeichert werden.

Wie bereits erläutert, entsprechen die einzelnen Kennlinien K jeweils einer eingestellten Hubposition oder Arbeitsposition des Unterlenkers 24, d.h. einem eingestellten Unterlenker-Winkel ϕ. Einzelne Kennlinien K werden also in Abhängigkeit von einer jeweiligen Hubposition des Unterlenkers 24 generiert. Für das Kennfeld gemäß Fig. 3 werden vorzugsweise zunächst die Kennlinie K1 bei einer minimalen Hubposition des Unterlenkers 24 und die Kennlinie K5 bei einer maximalen Hubposition des Unterlenkers 24 generiert. Der Kraftheber 14 wird zu diesem Zweck zunächst in die Hubposition mit dem Unterlenker-Winkel ϕ₁ eingestellt. Außerdem wird der Oberlenker 20 in seine Endlage mit der minimalen Oberlenker-Länge L_min eingefahren. Dies ist ein bevorzugter Ausgangsposition P1 für die Kalibrierung. Daraufhin wird der Oberlenker 20 bis zur maximalen Oberlenker-Länge L_max ausgefahren (Position P2) und danach wieder ganz eingefahren (Position P3). Wie bereits erläutert, wird während dieser Verstellung des Oberlenkers 20 der Oberlenker-Winkel β aufgezeichnet. Somit ist die Kennlinie K1 generiert und aufgezeichnet. Anschließend wird der Kraftheber 14 in die maximale Hubposition des Unterlenkers 24 mit dem Unterlenker-Winkel ϕ₅ eingestellt (Position P4). Der Oberlenker 20 wird wieder vollständig ausgefahren (Position P5) und danach wieder vollständig eingefahren (Position P6). Somit ist auch die Kennlinie K5 generiert und aufgezeichnet. Analog können weitere, zwischen den Kennlinien K1 und K5 liegende Kennlinien K (z.B. Kennlinien K2, K3, K4) generiert werden, um das Kennfeld gemäß Fig. 3 zu erzeugen. Alternativ können mittels Interpolation beliebig viele zwischen den Kennlinien K1 und K5 liegende Kennlinien generiert werden.

Nach Generierung der Kennlinien K für spezifische Hubpositionen des Unterlenkers 24 ist die Kalibrierung abgeschlossen. Der Kraftheber 14 und der Oberlenker 20 können nun in eine Arbeitsposition zur Aufnahme des Arbeitsbetriebs verstellt werden. Hierbei wird der Kraftheber 14 bzw. der Unterlenker 24 beispielsweise in eine Position P7 abgesenkt und der Oberlenker 20 mit dem Oberlenker-Kopplungspunkt 40 in eine Position P8 ausgefahren.

Der Vollständigkeit halber sei erwähnt, dass die erläuterte Kalibrierung bzw. das Kennfeld gemäß Fig. 3 für eine spezifische Einstellung des Krafthebers 14 gültig ist und für eine andere spezifische Einstellung ein entsprechend anderes Kennfeld generiert werden muss. Diese spezifischen Einstellungen betreffen insbesondere die eingestellte Anlenkposition an der Anlenkstelle 22, die eingestellte Länge der Hubstrebe 30, die eingestellte Gelenkposition 28 an dem Unterlenker 24 und etwaige unterschiedlich mögliche Kopplungsstellen 40, 42 am Anbaugerät 18 mit entsprechend unterschiedlichen Masthöhen M.

Die Hubpositionen mit den Unterlenker-Winkeln ϕ₁ und ϕ₅ können als untere und obere Grenze eines definierten Arbeitsbereichs des Krafthebers 14 betrachtet werden. Vorzugsweise wird verfahrensgemäß die Bestimmung einer physikalischen Größe außerhalb dieses Arbeitsbereichs ausgesetzt. Insbesondere wird eine Bestimmung der Oberlenker-Länge L ausgesetzt, während der Oberlenker-Winkel β weiterhin erfasst und aufgezeichnet wird, um eine erneute Bestimmung der Oberlenker-Länge L zu ermöglichen, sobald der Kraftheber 14 wieder innerhalb des definierten Arbeitsbereichs arbeitet.

Dem Diagramm gemäß Fig. 3 ist entnehmbar, dass bei bestimmten Hubpositionen des Unterlenkers 24, nämlich für die Kennlinien K1 bis K4, ein sensorisch erfasster Oberlenker-Winkel β nicht eindeutig einer Oberlenker-Länge L zugeordnet werden kann, so dass deren Bestimmung nicht unmittelbar eindeutig möglich ist. Vielmehr kommen zunächst zwei unterschiedliche Positionen des Krafthebers 14 in Frage, was sich beispielhaft in der Kennlinie K1 beiderseits eines Scheitelpunkts L_s durch zwei unterschiedliche Werte L_A und L_B der Oberlenker-Länge L ausdrückt. Während des Arbeitsbetriebs wird deshalb eine Fallunterscheidung durchgeführt, um festzustellen, ob sich der gesuchte Wert der Oberlenker-Länge L in dem Bereich A links des Scheitelpunkts L_s oder in dem Bereich B rechts des Scheitelpunkts L_s befindet. Für die Fallunterscheidung wird vorzugsweise eine zeitliche Veränderung des Oberlenker-Winkels β und eine Verstellrichtung des Oberlenkers 20 (von einer größeren Länge L zu einer kleineren Länge L oder umgekehrt) aufgezeichnet. Unter Berücksichtigung der Endlagen L_min und L_max des Oberlenkers 20 kann entschieden werden, ob sich die Oberlenker-Länge L des Oberlenkers 20 im Bereich A oder Bereich B befindet.

Das Diagramm bzw. Kennfeld gemäß Fig. 3 kann alternativ ausgehend von einer insbesondere sensorisch erfassten Oberlenker-Länge L zur Bestimmung des Oberlenker-Winkels β verwendet werden. Dabei ist eine Fallunterscheidung im Gegensatz zu einer Bestimmung der Oberlenker-Länge L überflüssig, da die Bestimmung des Oberlenker-Winkels β ausgehend von der erfassten Oberlenker-Länge L eindeutig ist.

Um das Verfahren zur Bestimmung einer aktuellen Oberlenker-Länge L_akt oder eines aktuellen Oberlenker-Winkels β durchzuführen, ist an dem Fahrzeug 10 mindestens ein Steuergerät 44 zur Erfassung und Verarbeitung von Sensordaten angeordnet (Fig. 4). Dieses Steuergerät 44 (oder ein mit ihm kommunizierendes weiteres Steuergerät) dient der Ansteuerung des Krafthebers 14 zu dessen Positionseinstellung bzw. -veränderung sowie der Ansteuerung eines den Oberlenker 20 aktuierenden hydraulischen Steuerventils 46 zur Änderung der Oberlenker-Länge L. Außerdem ist eine mit dem Steuergerät 44 verbundene Speichereinheit 48 vorgesehen, um die generierten Kalibrierdaten bzw. Kennlinien K zu speichern. Eine Bedienungs-Schnittstelle 50 am Fahrzeug 10 dient dem Start des Kalibriervorgangs sowie einer manuellen Ansteuerung des Krafthebers 14 und des Oberlenkers 20. Mittels einer Kennlinie K in der Speichereinheit 48 und eines sensorisch erfassten aktuellen Oberlenker-Winkels β-akt kann das Steuergerät 44 die zugehörige aktuelle Oberlenker-Länge L_akt bestimmen. Umgekehrt kann das Steuergerät 44 auch ausgehend von einer sensorisch erfassten aktuellen Oberlenker-Länge L_akt den zugehörigen aktuellen Oberlenker-Winkel β_akt bestimmen. In einer bevorzugten Ausführungsform ist das Steuergerät 44 derart programmiert, dass der Oberlenker 20 basierend auf einer spezifischen Eingabegröße angesteuert wird. Insbesondere wird hierbei das Steuerventil 46 vom Steuergerät 44 derart angesteuert, dass eine Sollgröße in Form einer Soll-Oberlenkerlänge L_soll oder eines Soll-Oberlenkerwinkels β_soll eingeregelt wird. Die anhand des gespeicherten Kalibrier-Kennfelds bestimmte aktuelle Oberlenker-Länge L_akt bzw. der mittels dieses Kalibrier-Kennfelds bestimmte aktuelle Oberlenker-Winkel L_akt wird dabei als Rückkopplung für die Regelung verwendet.

## Patentansprüche

1. Verfahren zur Bestimmung einer physikalischen Größe (L, β) eines verstellbaren Oberlenkers (20) eines Krafthebers (14) während seines Arbeitsbetriebs mit einem angebauten Anbaugerät (18) unter Verwendung von Kalibrierdaten (K, K1, K2, K3, K4, K5), welche vor einem Arbeitsbetrieb des Krafthebers (14) generiert werden, wobei das Anbaugerät (18) mit dem Oberlenker (20) und mindestens einem Unterlenker (24) des Krafthebers (14) verbunden ist,
**dadurch gekennzeichnet, dass**
die Kalibrierdaten (K, K1, K2, K3, K4, K5) ein Verhältnis von einer Länge (L) des Oberlenkers (20) zu einem zwischen dem Oberlenker (20) und einer Bezugsgeraden (16) eingeschlossenen Oberlenker-Winkel (β) repräsentieren.

2. Verfahren nach Anspruch 1, **dadurch gekennzeichnet, dass** während des Arbeitsbetriebs des Krafthebers (14) ein aktueller Oberlenker-Winkel (β-akt) des Oberlenkers (20) erfasst wird und als physikalische Größe eine aktuelle Länge (L_akt) des Oberlenkers (20) bestimmt wird.

3. Verfahren nach Anspruch 1, **dadurch gekennzeichnet, dass** während des Arbeitsbetriebs des Krafthebers (14) eine aktuelle Länge (L_akt) des Oberlenkers erfasst wird und als physikalische Größe ein aktueller Oberlenker-Winkel (β-akt) des Oberlenkers (20) bestimmt wird.

4. Verfahren nach einem der vorhergehenden Ansprüche, **dadurch gekennzeichnet, dass** Kalibrierdaten (K, K1, K2, K3, K4, K5) in Abhängigkeit von mindestens einem der folgenden Merkmale generiert werden:
- einer Gelenkposition (28-1, 28-2) am Unterlenker (24) zur Anlenkung einer Hubstrebe (30),
- einer Anlenkposition (22-1) an der Tragstruktur (12) des Fahrzeugs (10) zur Anlenkung des Oberlenkers (20),
- einer einstellbaren Länge der Hubstrebe (30),
- einer Masthöhe (M) des Anbaugerätes (18).

5. Verfahren nach einem der vorhergehenden Ansprüche, **dadurch gekennzeichnet, dass** Kalibrierdaten (K, K1, K2, K3, K4, K5) in Abhängigkeit von einer Hubposition (ϕ, ϕ₁, ϕ₂, ϕ₃, ϕ₄, ϕ₅) des Unterlenkers (24) generiert werden.

6. Verfahren nach Anspruch 5, **dadurch gekennzeichnet, dass** für unterschiedliche Hubpositionen (ϕ₁, ϕ₂, ϕ₃, ϕ₄, ϕ₅) des Unterlenkers (24) jeweils Kalibrierdaten (K1, K2, K3, K4, K5) generiert werden.

7. Verfahren nach einem der vorhergehenden Ansprüche, **dadurch gekennzeichnet, dass**
- für den Unterlenker (24) ein von einer Hubposition (ϕ₁) und einer weiteren Hubposition (ϕ₅) begrenzter Arbeitsbereich definiert wird, und
- bei einer Hubposition des Unterlenkers (24) außerhalb des Arbeitsbereichs die Bestimmung der physikalischen Größe (L, β) des Oberlenkers (20) ausgesetzt wird.

8. Verfahren nach einem der vorhergehenden Ansprüche, **dadurch gekennzeichnet, dass** zur Generierung von Kalibrierdaten (K, K1, K2, K3, K4, K5) in einer Hubposition (ϕ, ϕ₁, ϕ₂, ϕ₃, ϕ₄, ϕ₅) des Unterlenkers (24) bei angebautem Anbaugerät (18) die Oberlenker-Länge (L) zwischen einer minimalen Oberlenker-Länge (L_min) und einer maximalen Oberlenker-Länge (L_max) verändert wird.

9. Verfahren nach Anspruch 8, **dadurch gekennzeichnet, dass** die Oberlenker-Länge (L) in Richtung der minimalen Oberlenker-Länge (L_min) oder maximalen Oberlenker-Länge (L_max) verändert wird und danach in umgekehrter Richtung verändert wird.

10. Verfahren nach Anspruch 8 oder 9, **dadurch gekennzeichnet, dass** während einer Längenveränderung des Oberlenkers (20) der Oberlenker-Winkel (β) erfasst wird.

11. Verfahren nach einem der vorhergehenden Ansprüche, **dadurch gekennzeichnet, dass** Kalibrierdaten Bestandteil einer Kennlinie (K, K1, K2, K3, K4, K5) sind.

12. Verfahren nach einem der vorhergehenden Ansprüche, **dadurch gekennzeichnet, dass** die Oberlenker-Länge (L) in Abhängigkeit von mindestens einem der folgenden Merkmale bestimmt wird:
- einer zeitlichen Veränderung des Oberlenker-Winkels (β),
- einer Verstellrichtung der Oberlenker-Länge (L).

## Claims

1. Method for determining a physical size (L, β) of an adjustable top link (20) of a power lift (14) while it is being operated with an attached attachment (18) using calibration data (K, K1, K2, K3, K4, K5) that are generated before the power lift (14) is operated, wherein the attachment (18) is connected to the top link (20) and at least one bottom link (24) of the power lift (14), **characterized in that**
the calibration data (K, K1, K2, K3, K4, K5) represent a ratio of a length (L) of the top link (20) to a top-link angle (β) enclosed between the top link (20) and a reference straight line (16).

2. Method according to Claim 1, **characterized in that**, while the power lift (14) is being operated, a current top-link angle (β_akt) of the top link (20) is sensed and is determined as the physical size of a current length (L_akt) of the top link (20).

3. Method according to Claim 1, **characterized in that**, while the power lift (14) is being operated, a current length (L_akt) of the top link is sensed and is determined as the physical size of a current top-link angle (β_akt) of the top link (20).

4. Method according to one of the preceding claims, **characterized in that** calibration data (K, K1, K2, K3, K4, K5) are generated depending on at least one of the following features:
- a joint position (28-1, 28-2) on the bottom link (24) for the articulation of a lifting strut (30),
- an articulation position (22-1) on the support structure (12) of the vehicle (10) for the articulation of the top link (20),
- a settable length of the lifting strut (30),
- a mast height (M) of the attachment (18).

5. Method according to one of the preceding claims, **characterized in that** calibration data (K, K1, K2, K3, K4, K5) are generated depending on a lifting position (ϕ, ϕ1, ϕ2, ϕ3, ϕ4, ϕ5) of the bottom link (24).

6. Method according to Claim 5, **characterized in that** respective calibration data (K1, K2, K3, K4, K5) are generated for different lifting positions (ϕ1, ϕ2, ϕ3, ϕ4, ϕ5) of the bottom link (24).

7. Method according to one of the preceding claims, **characterized in that**
- for the bottom link (24), a working range delimited by a lifting position (ϕ1) and a further lifting position (ϕ5) is defined, and
- in a lifting position of the bottom link (24) outside the working range, the determination of the physical size (L, β) of the top link (20) is stopped.

8. Method according to one of the preceding claims, **characterized in that**, to generate calibration data (K, K1, K2, K3, K4, K5) in a lifting position (ϕ, ϕ1, ϕ2, ϕ3, ϕ4, ϕ5) of the bottom link (24) with an attachment (18) attached, the top-link length (L) is varied between a minimum top-link length (L_min) and a maximum top-link length (L_max).

9. Method according to Claim 8, **characterized in that** the top-link length (L) is varied in the direction of the minimum top-link length (L_min) or of the maximum top-link length (L_max) and is then varied in the opposite direction.

10. Method according to Claim 8 or 9, **characterized in that**, while the length of the top link (20) is being varied, the top-link angle (β) is sensed.

11. Method according to one of the preceding claims, **characterized in that** calibration data are a constituent part of a characteristic curve (K, K1, K2, K3, K4, K5).

12. Method according to one of the preceding claims, **characterized in that** the top-link length (L) is determined depending on at least one of the following features:
- a temporal variation in the top-link angle (β),
- an adjustment direction of the top-link length (L).

## Revendications

1. Procédé pour déterminer une grandeur physique (L, β) d'un bras supérieur d'attelage (20) d'un organe de relevage (14) pendant son régime de travail avec un outil rapporté (18) monté en utilisant des données d'étalonnage (K, K1, K2, K3, K4, K5) qui sont générées avant un régime de travail de l'organe de relevage (14), l'outil rapporté (18) étant relié au bras supérieur d'attelage (20) et au moins un bras inférieur d'attelage (24) de l'organe de relevage (14),
**caractérisé en ce que**
les données d'étalonnage (K, K1, K2, K3, K4, K5) représentent un rapport entre une longueur (L) du bras supérieur d'attelage (20) et un angle de bras supérieur d'attelage (β) inclus entre le bras supérieur d'attelage (20) et une droite de référence (16).

2. Procédé selon la revendication 1, **caractérisé en ce que** pendant le régime de travail de l'organe de relevage (14), un angle de bras supérieur d'attelage actuel (β_akt) du bras supérieur d'attelage (20) est détecté et une longueur actuelle (L_akt) du bras supérieur d'attelage (20) est déterminée en tant que grandeur physique.

3. Procédé selon la revendication 1, **caractérisé en ce que** pendant le régime de travail de l'organe de relevage (14), une longueur actuelle (L_akt) du bras supérieur d'attelage est détectée et un angle de bras supérieur d'attelage actuel (β_akt) du bras supérieur d'attelage (20) est déterminé en tant que grandeur physique.

4. Procédé selon l'une des revendications précédentes, **caractérisé en ce que** les données d'étalonnage (K, K1, K2, K3, K4, K5) sont générées en fonction d'au moins l'une des caractéristiques suivantes :
- une position de joint articulé (28-1, 28-2) au niveau du bras inférieur d'attelage (24) pour l'articulation d'une contrefiche de levage (30),
- une position d'articulation (22-1) au niveau de la structure porteuse (12) du véhicule (10) pour l'articulation du bras supérieur d'attelage (20),
- une longueur réglable de la contrefiche de levage (30),
- une hauteur de mât (M) de l'outil rapporté (18).

5. Procédé selon l'une des revendications précédentes, **caractérisé en ce que** les données d'étalonnage (K, K1, K2, K3, K4, K5) sont générées en fonction d'une position de levage (ϕ, ϕ₁, ϕ₂, ϕ₃, ϕ₄, ϕ₅) du bras inférieur d'attelage (24).

6. Procédé selon la revendication 5, **caractérisé en ce que** des données d'étalonnage (K1, K2, K3, K4, K5) sont respectivement générées pour différentes positions de levage (ϕ₁, ϕ₂, ϕ₃, ϕ₄, ϕ₅) du bras inférieur d'attelage (24) .

7. Procédé selon l'une des revendications précédentes, **caractérisé en ce que**
- une zone de travail délimitée par une position de levage (ϕ₁) et une position de levage supplémentaire (ϕ₅) est définie pour le bras inférieur d'attelage (24) et
- la détermination de la grandeur physique (L, β) du bras supérieur d'attelage (20) est suspendue dans le cas d'une position de levage du bras inférieur d'attelage (24) en-dehors de la zone de travail.

8. Procédé selon l'une des revendications précédentes, **caractérisé en ce que** pour la génération des données d'étalonnage (K, K1, K2, K3, K4, K5) dans une position de levage (ϕ, ϕ₁, ϕ₂, ϕ₃, ϕ₄, ϕ₅) du bras inférieur d'attelage (24) avec l'outil rapporté (18) monté, la longueur de bras supérieur d'attelage (L) est modifiée entre une longueur de bras supérieur d'attelage minimale (L_min) et une longueur de bras supérieur d'attelage maximale (L_max).

9. Procédé selon la revendication 8, **caractérisé en ce que** la longueur de bras supérieur d'attelage (L) est modifiée en direction de la longueur de bras supérieur d'attelage minimale (L_min) ou de la longueur de bras supérieur d'attelage maximale (L_max) et ensuite modifiée en sens inverse.

10. Procédé selon la revendication 8 ou 9, **caractérisé en ce que** l'angle de bras supérieur d'attelage (β) est détecté pendant une modification de la longueur du bras supérieur d'attelage (20).

11. Procédé selon l'une des revendications précédentes, **caractérisé en ce que** les données d'étalonnage sont un élément constitutif d'une courbe caractéristique (K, K1, K2, K3, K4, K5).

12. Procédé selon l'une des revendications précédentes, **caractérisé en ce que** la longueur de bras supérieur d'attelage (L) est déterminée en fonction d'au moins l'une des caractéristiques suivantes :
- une modification dans le temps de l'angle de bras supérieur d'attelage (β),
- une direction de positionnement de la longueur de bras supérieur d'attelage (L).
